# FASCICULE DE BREVET EUROPEEN

(11) **EP 3 639 541 B1**
(45) Date de publication et mention de la délivrance du brevet: **05.01.2022**
(21) Numéro de dépôt: 18773506.3
(22) Date de dépôt: 12.06.2018
(51) Int. Cl.: H04W 8/20, H04W 76/10, H04L 29/06

(54) **CONFIGURATION D'UN TERMINAL DANS UN RÉSEAU IMS AVEC UNE STRATÉGIE DE RESÉLECTION D'UN TYPE RÉSEAU**
KONFIGURIEREN EINES ENDGERÄTS IN EINEM IMS NETZ MIT EINEM STRATEGIE FÜR NETZTYP WIEDERAUSWAHL
CONFIGURING A TERMINAL IN AN IMS NETWORK WITH A STRATEGY TO RESELECT A TYPE OF NETWORK

(30) Priorité: 14.06.2017 FR 1755367
(43) Date de publication de la demande: 22.04.2020
(73) Titulaire: ORANGE, 92130 Issy-les-Moulineaux (FR)
(72) Inventeur: BOUVET, Bertrand, 92326 Châtillon Cedex (FR); BOIZARD, Stéphane, 92326 Châtillon Cedex (FR)
(86) Numéro de dépôt international: PCT/FR2018/051378
(87) Numéro de publication internationale: WO 2018/229425

(56) Documents cités:
- US-A1- 2007 171 841
- US-A1- 2009 129 388
- US-A1- 2012 303 831
- US-A1- 2013 337 804
- GARCIA-MARTIN ERICSSON E HENRIKSON LUCENT D MILLS VODAFONE M: "Private Header (P-Header) Extensions to the Session Initiation Protocol (SIP) for the 3rd-Generation Partnership Project (3GPP); rfc3455.txt", PRIVATE HEADER (P-HEADER) EXTENSIONS TO THE SESSION INITIATION PROTOCOL (SIP) FOR THE 3RD-GENERATION PARTNERSHIP PROJECT (3GPP)?; RFC3455.TXT, INTERNET ENGINEERING TASK FORCE, IETF; STANDARD, INTERNET SOCIETY (ISOC) 4, RUE DES FALAISES CH- 1205 GENEV, 1 janvier 2003 (2003-01-01), XP015009238,

## Description

La présente invention se situe dans le domaine général des télécommunications.

Elle concerne plus particulièrement la gestion des accès par un terminal à une pluralité de réseaux d'accès à un réseau de télécommunication, par exemple pour accéder à un service de téléphonie ou de visiophonie sur réseau mobile.

### Art antérieur

Les services téléphoniques et visiophoniques sur réseaux mobiles 2G et 3G utilisent la technologie « circuit » dite CS (Circuit Switching).

Depuis quelques années, avec l'arrivée des réseaux mobiles 4G, des opérateurs commencent à déployer des architectures IMS (IP Multimedia Subsystem) permettant de fournir à leurs clients des services VoLTE/ViLTE (VxLTE), c'est-à-dire des services vocaux , visiophoniques et SMSoIP (Short Message Service over IP) en technologie IP.

Par ailleurs, pour couvrir les manques de couverture radio cellulaire 2G, 3G ou 4G, typiquement en zone blanche ou en situation de « In-Door », les opérateurs ont décidé de proposer à leurs clients les services VoWiFi/ViWiFi (VxWiFi), avec le mode dit « S2b » c'est-à-dire des accès WiFi non « trusted » (non géré par l'opérateur). Un avantage de ces services VxWiFi est qu'ils peuvent être disponibles sur n'importe quel accès WiFi, que le point d'accès soit géré ou non par l'opérateur de télécommunication, à l'opposé du mode VxWiFi dit « S2a » qui ne fonctionne qu'à partir des points d'accès WiFi gérés par l'opérateur.

Les services VxLTE et VxWiFi utilisent tous deux la technologie « paquet » dite PS, et le même cœur de réseau IMS.

Il existe donc à ce jour trois modes d'accès différents à un même réseau mobile : deux modes utilisant la technologie paquet PS (le réseau d'accès 4G et le réseau d'accès WiFi), et un mode utilisant la technologie circuit CS (le réseau d'accès 2G/3G). Un terminal mobile doit pouvoir s'adapter aux différentes contraintes de ces modes de connexion.

D'autre part, en cas de mobilité vers un réseau visité (roaming out), certains service peuvent ne pas être offert par l'opérateur du réseau visité, soit parce qu'ils ne sont pas mis en œuvre, soit parce que les accords d'itinérance ne prévoient pas l'accès à ces services.

Actuellement, il n'existe aucun standard permettant d'adapter le comportement d'un terminal aux services offerts par un accès ou un réseau particulier. Les terminaux compatibles actuellement offerts par les opérateurs sont donc configurés de manière statique dans un logiciel interne par les fournisseurs de terminaux selon des instructions fournies par les opérateurs.

Une telle solution manque de flexibilité, notamment lorsque suite à un incident, un service offert par un réseau n'est plus disponible, ou en cas d'évolution des services offerts par le réseau. Par exemple, un terminal préconfiguré par un opérateur selon un certain nombre de services offerts au moment de la commercialisation du terminal ne pourra pas bénéficier de l'ouverture de nouveaux services sans une mise à jour de son logiciel interne. Or, la mise à jour du logiciel interne des terminaux est souvent sous contrôle des fournisseurs de ces terminaux et non sous le contrôle des opérateurs réseau, ce qui occasionne des délais parfois important lorsqu'un opérateur souhaite modifier le comportement d'un terminal se connectant à son réseau.

De même, un terminal en situation de nomadisme dans un réseau visité ne pourra pas s'adapter aux services et/ou aux contraintes du réseau visité, avec pour conséquence l'indisponibilité de certains services en situation d'itinérance ou un mauvais fonctionnement du terminal selon les choix techniques ayant pu être fait par l'opérateur du réseau visité (mauvais interprétation d'un code d'erreur par exemple). De tels disfonctionnements peuvent engendrer une consommation excessive de ressources. D'autres problèmes, tes que des problèmes de facturation peuvent aussi survenir, par exemple, lorsqu'un utilisateur est habitué à ce que son terminal utilise gratuitement un réseau d'accès WiFi lorsqu'il est disponible, mais que l'opérateur d'un réseau visité prévoit un repli sur un réseau cellulaire dans les mêmes circonstances.

Un terminal peut être configuré pour maintenir un enregistrement sur le réseau IMS lorsqu'il bascule sur une technologie d'accès 2G/3G. Un tel comportement peut être intéressant pour un opérateur offrant des services IMS sur accès 2G/3G, comme par exemple un service SMSoIP car il permet au terminal de conserver l'adresse IP qui lui a été attribuée sous couverture 4G, et ainsi de maintenir un enregistrement SIP pour bénéficier de services IMS sur un réseau 2G/3G. Toutefois, maintenir un tel contexte est inutilement couteux lorsqu'aucun service IMS n'est disponible sur une technologie d'accès 2G/3G. US 2012/303831 A1 décrit la transmission d'une requête SIP à un serveur CSCF. Cette requête inclut le type de RAT utilisé par le terminal. L'information sur le RAT est utilisée afin de déterminer les services disponibles pour le terminal. Cette information est transmise au terminal en réponse à la requête SIP.

US 2009/129388 A1 décrit la transmission d'un message SIP Invite par un terminal à un serveur du réseau. Le serveur du réseau répond au message SIP en indiquant comment réaliser un appel d'urgence.

Il existe donc un besoin pour une solution permettant d'adapter dynamiquement le comportement d'un terminal selon un contexte réseau à moindre coût.

### Résumé

L'invention est décrite dans les revendications.

A cet effet, il est proposé un procédé de configuration d'un terminal par un serveur dans un réseau de communication IMS.

Le procédé est remarquable en ce qu'il comporte les étapes de la revendication 1 mises en œuvre par un serveur du réseau IMS.

Une configuration adaptée au contexte dans lequel un terminal se connecte au réseau est transmise au moment de son enregistrement sur le réseau. Ainsi, le terminal dispose toujours d'une configuration adaptée, dès lors qu'il est enregistré sur un réseau de communication. Pour cela, le message d'enregistrement initialement transmis par le terminal comprend un ou plusieurs paramètres relatifs au réseau d'accès utilisé. Il peut s'agir par exemple d'un identifiant d'un pays ou d'un réseau visité. Ce paramètre est renseigné par le terminal lui-même ou par un équipement réseau intermédiaire sur le chemin réseau emprunté par le message, tel que par exemple un serveur P-CSCF. Lorsque le paramètre est renseigné par un équipement intermédiaire, sa validité peut être certifiée. A la réception d'un tel message, le serveur obtient une configuration adaptée aux conditions dans lesquelles le terminal accède au réseau de communication, en interrogeant par exemple une base de données dans laquelle sont mémorisées des associations entre des paramètres relatifs au réseau d'accès et des configurations particulières. La configuration ainsi obtenue est transmise au terminal dans la réponse au message d'enregistrement transmis par le terminal.

Le procédé permet ainsi une configuration automatique du terminal selon le contexte dans lequel il accède aux services d'un réseau IMS. La configuration des terminaux peut être modifiée sans mise à jour d'un logiciel interne du terminal ou d'une carte SIM

Selon une réalisation particulière du procédé de configuration, la configuration obtenue et transmise au terminal comprend au moins un paramètre relatif à un type de codage des flux multimédias accepté par le réseau de communication.

Des informations concernant les différents codages utilisables sur le réseau de communication sont transmises au terminal dès son enregistrement, dans le message de réponse au message d'enregistrement, par exemple sous forme d'une description XML comprise dans le corps d'un message 200 OK de réponse à un message SIP d'enregistrement ou de souscription à des événements. De telles informations sont par exemple un ou plusieurs codecs (pour codeur-décodeur) utilisables sur le réseau, une période de tramage des paquets RTP ou tout autre paramètre de configuration relatif au codage des médias mis en œuvre dans les communications établies au travers du réseau. Le réseau peut ainsi interdire l'utilisation de certains codecs ou imposer un nombre maximum d'échantillons par paquet transmis. De manière classique, de tels paramètres sont fournis par le réseau à l'établissement d'une communication. Par exemple, un terminal propose une liste de codecs dont il dispose pour coder les flux d'une communication et le réseau fournit en retour un sous ensemble de codecs compatibles. Cette manière de faire présente l'inconvénient d'accroître inutilement la taille des messages d'établissement d'appels lorsque certains codecs proposés par le terminal ne sont pas supportés par le réseau. Un terminal selon l'invention connaît dès son enregistrement les codecs et les paramètres qui s'y rapportent qui sont supportés par le réseau. Ainsi, le procédé permet d'éviter que des codecs non supportés ne soient proposés par le terminal, ce qui permet d'optimiser la quantité de données transmises pour établir une communication. Le temps d'établissement d'appel peut être accéléré et la bande passante est optimisée.

Selon un mode de réalisation particulier, le procédé est tel que la configuration comprend au moins un critère de sélection d'une technologie d'accès particulière pour établir des communications.

Un terminal mobile de type smartphone peut accéder à un réseau de communication IMS selon différentes technologies d'accès. Par exemple, un terminal mobile peut se connecter à un réseau IMS via un réseau d'accès cellulaire de type 4G conforme au standard VxLTE. Un tel standard permet l'établissement de communications audio ou vidéo en mode paquet utilisant le protocole IP (Internet Protocol). Ce même terminal mobile peut également se connecter au réseau IMS par l'intermédiaire d'un point d'accès Wi-Fi en utilisant un protocole VxWi-Fi pour établir des communications en mode paquet. Le terminal peut en outre établir des communications en mode circuit au travers d'un réseau cellulaire 2G ou 3G.

Le procédé de configuration permet de fournir, à l'enregistrement du terminal, des critères de sélection d'un réseau préféré pour passer les communications ou échanger des messages de type SMS, une ou plusieurs stratégies de repli vers un réseau d'accès d'un second type en cas d'échec de l'établissement d'une communication sur un réseau d'accès d'un premier type ou de perte de connexion, une stratégie de maintien du bearer lors du passage d'une première technologie d'accès vers une seconde technologie d'accès. Par exemple, la configuration peut définir un second type de réseau d'accès à utiliser lorsque l'établissement d'une communication échoue avec un code d'erreur particulier.

Un opérateur d'un réseau de communication peut ainsi contraindre les terminaux s'enregistrant sur son réseau à observer certains comportements attendus en cas d'erreur ou lorsque des conditions particulières liées à la logique de service de l'opérateur l'imposent.

Selon un mode de réalisation particulier du procédé de configuration, la configuration obtenue et transmise au terminal dans la réponse au message d'enregistrement SIP comprend au moins une stratégie de gestion des appels d'urgence.

Un opérateur peut de cette manière indiquer à un terminal que les appels d'urgence doivent être émis en utilisant une technologie d'accès particulière. Par exemple, un opérateur peut indiquer au terminal s'enregistrant sur son réseau que les appels d'urgence doivent être passés selon une technologie circuit, 2G ou 3G par exemple. Une telle disposition permet par exemple d'éviter que des appels d'urgence ne soient émis en utilisant une technologie d'accès pour laquelle l'opérateur ne sait pas fournir le traitement, par exemple en VoLTE du fait de procédures protocolaires spécifiques à implémenter, ou bien ne sait pas fournir une localisation certifiée du terminal appelant, par exemple en VoWiFi.

Selon une réalisation particulière du procédé de configuration, la configuration comprend au moins une stratégie de configuration de la pile protocolaire SIP du terminal.

Par exemple, sur un réseau d'accès fixe, la configuration transmise dans la réponse au message d'enregistrement SIP peut définir des premiers paramètres de configuration SIP (téléphonie avec codec G711/G729/G722 + DTMF conformes à la RFC 4733 + annulation d'écho activée, + contrôle de gain activé + taille du buffer de gigue dynamique + détection d'activité vocale activée) pour la téléphonie classique et des seconds paramètres de configuration (uniquement le codec G711, DTMF dans la bande + détection d'activité vocale désactivé + annulation d'écho désactivée + contrôle de gain désactivé + taille du buffer de gigue fixe) à appliquer pour certains types de communication, comme des communications fax ou modem par exemple). Il est ainsi possible pour un réseau d'opérateur de configurer finement le comportement des terminaux qui s'enregistrent pour établir des communications au travers de son réseau et d'offrir des configurations optimisées en fonction du contexte d'utilisation ou du type de souscription de services par l'utilisateur du terminal.

Par exemple, sur réseau d'accès mobile, la configuration transmise dans la réponse au message d'enregistrement SIP peut définir des modes de configuration des pré-conditions SIP, par exemple en prenant en compte telle ou telle version des spécifications définies par les organismes de normalisation telles que le 3GPP, la GSMA,....

D'une manière générale, la configuration transmise au terminal peut comprendre tout type de paramètres et de règles permettant d'adapter le comportement du terminal aux services offerts par le réseau ou au contraintes imposées par une technologie d'accès, une logique commerciale propre à l'opérateur, une logique de service, des changements de technologie, ou une logique de prise en compte des évolutions apportées par les organismes de normalisation..

Selon un mode de réalisation particulier, le procédé de configuration est tel qu'il est mis en œ uvre sur un serveur choisi parmi les serveurs de l'ensemble composé de :
- P-CSCF (Proxy Call State Call Control),
- I-CSCF (Interrogating Call State Control Function),
- S-CSCF(Session Call State Control Function),
- A-SBC (Access Session Border Controller.),
- AS (Application Server), ou
- HSS (Home Service Subscriber).

Un serveur S-CSCF est en charge de l'enregistrement dans le réseau IMS. Il est ainsi bien placé pour obtenir et transmettre une configuration dans une réponse à un message d'enregistrement transmis par un terminal.

Les messages d'enregistrements SIP REGISTER et leurs réponses transitent par les serveurs I-CSCF et P-CSCF. D'autre part, ils sont souvent co-localisés avec le S-CSCF. Ces serveurs sont donc adaptés pour fournir une configuration au terminal. De plus, le I-CSCF interroge le serveur HSS et peut ainsi facilement obtenir des données de configurations propres à l'utilisateur ou aux services souscrits par le terminal à partir du serveur HSS.

Pour le cas du « roaming out », c'est-à-dire lorsque le terminal est en itinérance dans un réseau d'un pays visité, avec modèle LBO (Local Break Out), les I-CSCF et S-CSCF sont localisés dans le pays d'origine alors que le P-CSCF (ou A-SBC) est localisé dans le pays visité. La configuration du terminal fournie par le P-CSCF peut donc être entièrement maîtrisée par l'opérateur du réseau visité, sans que les accords d'itinérance ne définissent la configuration des terminaux à fournir dans le cas où cette configuration des terminaux est fournie par l'un des équipements présents dans le réseau d'origine (S-CSCF, I-CSCF, AS).

Dans le cas d'une itinérance avec modèle S8HR (S8 Home Routed), l'ensemble des équipements P-CSCF (ou A-SBC), I-CSCF, S-CSCF, AS sont localisés dans le réseau d'origine. Dans ce cas, les accords d'itinérance doivent prévoir les paramètres de configuration à fournir aux terminaux, ce qui implique des processus plus évolués et complexes à mettre en place.

Le mécanisme SIP de « Third party Registration » permet à un serveur d'application (AS) de voir transiter les messages d'enregistrement et leurs réponses. Un tel serveur est donc également bien placé pour fournir une configuration au terminal.

Enfin, un serveur A-SBC peut voir transiter les messages d'enregistrement et leurs réponses lorsqu'il est placé devant le P-CSCF, ou en remplacement du P-CSCF.

Selon une réalisation particulière, le procédé de configuration est tel que le au moins un paramètre relatif au réseau d'accès est choisi dans l'ensemble comprenant :
- identifiant de pays visité,
- identifiant de réseau visité,
- identifiant d'un point d'accès,
- une technologie d'accès,
- une information de localisation, ou
- identifiant du terminal.

Le message d'enregistrement SIP reçu comprend au moins un paramètre relatif au réseau d'accès. Ce ou ces paramètres peuvent être insérés dans le message d'enregistrement par le terminal ou par un équipement intermédiaire, comme un serveur P-CSCF par exemple après interaction avec un PCRF (Policy and Charging Rules Function). Dans ce dernier cas, les informations insérées peuvent être certifiées par le réseau, elles sont donc fiable.

En particulier, le message comprend un identifiant de pays visité et/ou un identifiant de réseau visité. L'identifiant de pays visité et/ou un identifiant de réseau visité sont des critères importants pour définir le comportement d'un terminal. Ceux-ci déterminent par exemple d'éventuels accords d'itinérance entre opérateurs dont dépend la disponibilité de services particuliers, la facturation, des choix techniques imposant une réaction particulière du terminal en cas d'erreur, etc.

La configuration retournée au terminal peut aussi dépendre d'un identifiant de point d'accès, d'une technologie d'accès, d'une information de localisation du terminal ou encore d'un identifiant du terminal. Par exemple, des services peuvent être ou non disponibles selon que le terminal se connecte depuis un point d'accès particulier, selon une technologie d'accès particulière ou à un emplacement particulier. L'identifiant du terminal, par exemple l'IMEI (International Mobile Equipement Identifier) ou User Agent SIP, permet de fournir une configuration adaptée à un terminal particulier lorsque par exemple, plusieurs terminaux partagent une même identité publique, ou bien lorsqu'il est connu que certaines versions matérielles et/ou logicielles de terminaux ne supportent pas certaines fonctionnalités.

Selon un autre aspect, et de façon correspondante au procédé de configuration, il est proposé un procédé d'obtention d'une configuration par un terminal dans un réseau de communication IMS.

Le procédé d'obtention d'une configuration est remarquable en ce qu'il comprend les étapes suivantes mises en œuvre par un terminal et décrites dans la revendication 7.

Le procédé d'obtention d'une configuration peut être mis en œuvre par un terminal lors de sa connexion à un réseau de communication IMS ou suite à une mobilité. Le terminal transmet à un serveur d'enregistrement un ou plusieurs paramètres relatifs à l'accès réseau utilisé dans un message d'enregistrement, comme par exemple un message SIP REGISTER ou SIP SUBSCRIBE. Le serveur met en œuvre le procédé de configuration exposé ci-avant. Le terminal reçoit, en réponse à ce message d'enregistrement, une réponse dans laquelle le serveur a inséré une configuration adaptée. Le terminal peut alors être configuré selon la configuration reçue.

Les procédés de configuration et d'obtention d'une configuration permettent ainsi une configuration dynamique du terminal au moment de l'enregistrement ou du réenregistrement sur un réseau d'accès. Le ou les paramètres de configuration sont transmis dans la réponse au message d'enregistrement, ce qui permet au terminal de toujours disposer d'une configuration adaptée au contexte de l'accès, dès qu'il se connecte à un réseau de communication où dès qu'il bascule d'un premier réseau d'accès vers un second réseau d'accès. Le terminal applique la configuration reçue jusqu'à la réception d'une réponse à un message d'enregistrement SIP contenant une nouvelle configuration à appliquer.

De cette façon, en cas d'itinérance dans un réseau visité, la configuration du terminal sera automatiquement adaptée aux contraintes et/ou aux services du réseau visité. De même, lorsque le terminal bascule d'une première technologie d'accès vers une seconde technologie d'accès, par exemple lorsqu'il bascule d'un accès VoLTE (Voice over Long Term Evolution) vers un accès VoWiFi (Voice over Wi-Fi) ou inversement, le terminal obtient automatiquement une configuration adaptée à la technologie d'accès et/ou aux contraintes et services liées à la technologie d'accès.

Selon une réalisation particulière du procédé d'obtention de configuration, la configuration comprend au moins un élément choisi parmi l'ensemble des éléments suivants :
- un paramètre relatif à un type de codage des flux multimédias accepté par le réseau de communication,
- un critère de sélection d'une technologie d'accès particulière pour établir des communications.,
- une stratégie de gestion des appels d'urgence.,
- une stratégie de configuration des procédures de continuité de service en cas de mobilité, ou
- une stratégie de configuration de la pile protocolaire SIP du terminal.

Les éléments compris dans la configuration obtenue par le terminal présente des avantages au moins analogues à ceux décrits ci-avant en référence au procédé de configuration.

Selon un autre aspect, il est proposé un serveur de configuration d'un terminal dans un réseau de communication IMS.

Un tel serveur est remarquable en ce qu'il comporte les modules décrits dans la revendication 9.

Selon encore un autre aspect, il est proposé un dispositif d'obtention d'une configuration pour la connexion du dispositif à un réseau de communication IMS.

Un tel dispositif est remarquable en ce qu'il comporte:
- les modules de communication décrits dans la revendication 10.

Selon encore un autre aspect, il est proposé un terminal comprenant un dispositif d'obtention d'une configuration tel que décrit ci-dessus.

L'invention concerne également un système de configuration comprenant un serveur de configuration et un terminal de configuration tels que décrits ci-dessus.

Dans un mode particulier de réalisation, les différentes étapes des procédés de configuration et d'obtention d'une configuration sont déterminées par des instructions de programmes d'ordinateurs.

En conséquence, l'invention vise également un programme d'ordinateur tel que décrit dans la revendication 13.

Un tel programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Enfin, l'invention concerne un support d'informations lisible par un processeur tel que décrit dans la revendication 14.

Le support d'informations peut être n'importe quelle entité ou dispositif capable de stocker le programme. Par exemple, le support peut comporter un moyen de stockage non transitoire, tel qu'une ROM, par exemple un CD ROM ou une ROM de circuit microélectronique, ou encore un moyen d'enregistrement magnétique, par exemple une disquette (floppy disc) ou un disque dur. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

Les différents modes ou caractéristiques de réalisation précités peuvent être ajoutés indépendamment ou en combinaison les uns avec les autres, aux étapes du procédé de configuration et/ou au procédé d'obtention d'une configuration tels que définis ci-dessus.

Les terminaux, serveurs, dispositifs et programmes présentent au moins des avantages analogues à ceux conférés par le procédé correspondant.

### Brève description des figures

D'autres caractéristiques et avantages du procédé apparaîtront plus clairement à la lecture de la description suivante d'un mode de réalisation particulier, donné à titre de simple exemple illustratif et non limitatif, et des dessins annexés, parmi lesquels :
- La figure 1 représente un système de communication adapté pour mettre en œuvre les procédés de configuration et d'obtention d'une configuration,
- La figure 2 illustre sous la forme d'un chronogramme un échange de messages pour l'enregistrement d'un terminal dans un réseau de communication,
- La figure 3 illustre les principales étapes du procédé de configuration selon un mode de réalisation particulier de l'invention,
- La figure 4 illustre les principales étapes du procédé d'obtention d'une configuration selon un mode de réalisation particulier de l'invention,
- La figure 5 représente, dans un mode de réalisation particulier, l'architecture d'un serveur de configuration conforme à l'invention, et
- La figure 6 représente, selon une réalisation particulière, l'architecture d'un dispositif d'obtention d'une configuration conforme à l'invention.

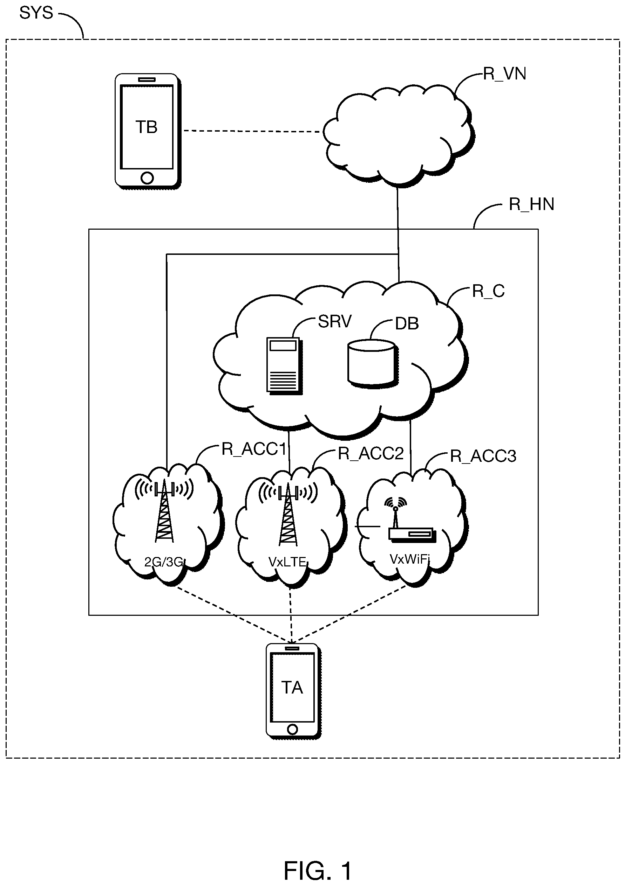

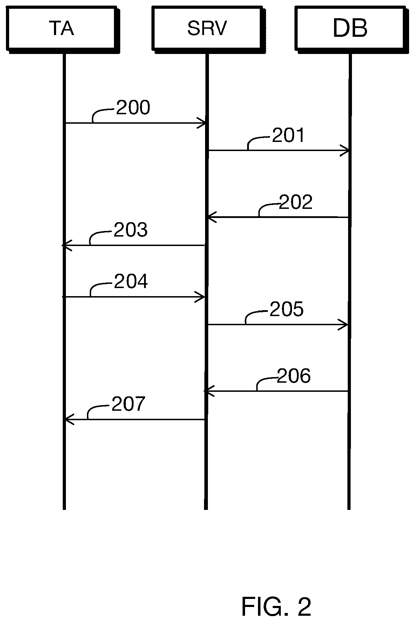

Description détaillée de modes de réalisation Les modes de réalisation décrits correspondant aux figure 1 et 2 ne relèvent pas de l'invention et ne sont présents qu'à titre illustratif.

La figure 1 représente un système SYS conforme à l'invention.

Ce système SYS permet d'effectuer une session de communication entre deux équipements dans un réseau et met en œuvre un procédé de configuration ainsi qu'un procédé d'obtention d'une configuration conformes à un mode particulier de réalisation de l'invention.

Ce système SYS comporte un terminal TA d'un utilisateur. Ce terminal peut consister en un téléphone, un téléphone intelligent (en anglais « Smartphone »), un ordinateur ou une tablette ou un objet connecté.

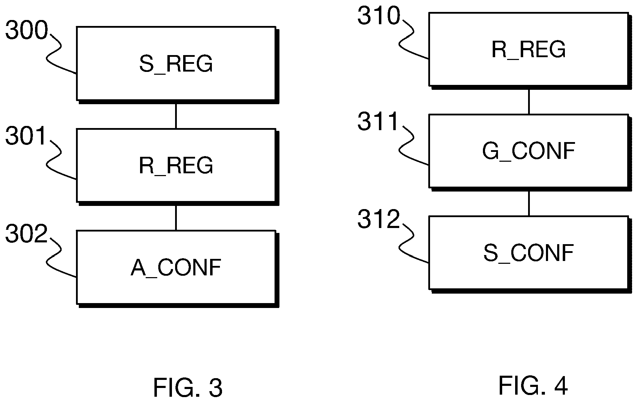

Le terminal TA est adapté pour mettre en œuvre le procédé d'obtention d'une configuration décrit en référence à la figure 4.

Le terminal TA est relié à un réseau d'origine R_HN. Ce réseau d'origine R_HN correspond au réseau de l'opérateur auprès duquel l'utilisateur du terminal TA a souscrit son abonnement principal (« Home Network » en anglais).

Dans cet exemple, ce réseau d'origine R_HN comporte trois réseaux d'accès R_ACC1, R_ACC2 et R_ACC3, ainsi qu'un réseau cœur R_C interconnecté uniquement aux deux réseaux d'accès R_ACC2 et R_ACC3.

Par exemple, dans ce mode de réalisation, le réseau cœur R_C est un réseau cœur IMS interconnecté à des réseaux d'accès 4G (R_ACC2) et WiFi (R_ACC3), mais pas au réseau d'accès RACC1, constitué dans cet exemple par un réseau d'accès 2G/3G.

Le réseau cœur R_C comporte un serveur SRV mettant en œuvre le procédé de configuration décrit en référence à la figure 3, et une base de données DB dans laquelle sont mémorisées des paramètres de configuration de terminaux en association avec des paramètres d'accès réseau.

Le réseau d'origine R_HN est interconnecté avec un réseau R_VN. Le réseau R_VN est le réseau d'origine d'un terminal TB. Le terminal TB est un terminal de communication tel qu'un téléphone, un smartphone, un ordinateur ou encore une tablette.

Grâce à l'interconnexion entre le réseau R_HN et le réseau R_VN, le terminal TA peut établir des communications avec le terminal TB.

Les réseaux R_HN et R_VN peuvent être interconnectés au travers d'un réseau de transit non représenté.

Avant de pouvoir émettre ou recevoir des communications par l'intermédiaire du réseau R_C, le terminal TA doit réaliser une procédure d'enregistrement.

La procédure d'enregistrement est réalisée par un terminal lors de son attachement à un réseau IMS, et à chaque changement de technologie de réseau d'accès et lors du renouvellement d'enregistrement en fonction de la valeur « Expires » retournée dans la réponse au REGISTER. Par exemple, lorsque le terminal accède au réseau R_C par l'intermédiaire du réseau d'accès R_ACC3, la procédure d'enregistrement est réalisée. Lorsque le terminal TA quitte le réseau Wi-Fi R_ACC3 pour se connecter sur le réseau cellulaire 4G R_ACC2, la procédure d'enregistrement est de nouveau réalisée par le terminal.

La procédure d'enregistrement comprend, du point de vue du terminal l'émission d'un message d'enregistrement SIP REGISTER à destination du réseau R_C, et la réception d'une réponse positive ou négative du réseau R_C. Les messages échangés pour l'enregistrement peuvent être plus nombreux et comprendre par exemple des messages d'authentification.

La figure 2 illustre un échange de message permettant au terminal TA de s'enregistrer sur le réseau R_C.

Le terminal émet une requête SIP REGISTER 200 à destination du serveur SRV appartenant au cœur IMS R_C. Le serveur SRV peut correspondre à différents serveurs du réseau R_C. Il peut s'agir par exemple d'un serveur P-CSCF (ou A-SBC), I-CSCF ou S-CSCF, ou encore d'un serveur d'application ou d'une combinaison d'entre eux. Le serveur SRV reçoit la requête 200 et interroge par un message 201 une base de données comprenant des données relatives aux abonnés du réseau. Dans le cas d'un réseau IMS tel que le réseau R_C, la base de données est par exemple un serveur HSS, le message 201 peut être un message SAR conforme au protocole Diameter.

Le serveur SRV obtient en réponse les paramètres liés à l'authentification au travers du message 202 et retourne le code SIP 401 au terminal dans le message 203 contenant les paramètres d'authentification et des paramètres de sécurité permettant de sécuriser les échanges ultérieurs.

Le terminal TA authentifie le réseau R_C sur la base des paramètres d'authentification reçus puis il calcule la réponse d'authentification avant de la transmettre dans un second message SIP REGISTER 204 vers le serveur SRV au travers d'une liaison sécurisée dont les caractéristiques ont été négociées lors de l'échange des messages 200 et 203. Le serveur SRV compare le résultat d'authentification calculé par le terminal par exemple et pour la technologie d'accès WIFI ou 4G, sur la base du contenu de la carte SIM puis des paramètres d'authentification fournis dans la réponse SIP 401 avec le résultat attendu.

Si le résultat de la comparaison est positif, alors le serveur SRV enregistre le terminal dans la base de données DB associé à un état « enregistré » et à l'adresse du serveur SRV prenant en charge le terminal.

Une fois l'enregistrement réalisé sur le réseau, celui-ci est renouvelé à intervalle régulier sur la base d'une valeur d'expiration contenue dans la réponse au message d'enregistrement. Toutefois, en cas de changement de technologie d'accès, par exemple si le terminal quitte le réseau d'accès R_ACC2 pour le réseau d'accès R_ACC3, la procédure d'enregistrement est de nouveau réalisée sans tenir compte de la valeur d'expiration indiquée.

Le message d'enregistrement SIP REGISTER émis par le terminal TA comprend des paramètres relatifs à l'accès réseau. De tels paramètres correspondent par exemple au contenu d'un champ PANI (Private-Access Network Identifier) dont le contenu est positionné par le terminal.

Le champ PANI est valorisé par le terminal selon le type d'accès 2G ou 3G ou 4G et comprend de manière classique un champ d'information pour la technologie d'accès radio cellulaire GERAN/UTRAN/EUTRAN, un champ prévu pour recevoir un identifiant de cellule radio, et pour la technologie d'accès WIFI, un champ d'information pour la technologie d'accès WiFi IWLAN, un champ pour renseigner l'adresse MAC du point d'accès Wi-Fi utilisé.

Les informations renseignées par le terminal dans le champ PANI ne sont pas certifiées car elles pourraient être facilement falsifiées par le terminal TA (on parle alors de PANI UPLI pour User Provided Location Information).

De manière connue, le réseau R_C valorise un second champ PANI lorsqu'il intercepte un message d'enregistrement en provenance du terminal TA à partir de données obtenues en interrogeant différentes bases de données du réseau R_C et/ou d'équipements du réseau d'accès. Par exemple, le serveur SRV peut consulter le PCRF (Policy and Charging Rules Function), le HLR (Home Location Register) ou le HSS (Home Service Subscriber) pour connaître la technologie d'accès et/ou la dernière cellule radio utilisée.

Des paramètres relatifs à l'accès réseau peuvent aussi être contenus dans un champ SIP P-VNI (Private-Visited Network Identifier) inséré par un serveur par lequel transitent les requêtes SIP émises par le terminal.

Malgré les efforts de normalisation réalisé dans les réseaux de communication IMS et notamment dans les accès VoLTE et VoWiF, le comportement du terminal nécessite d'être ajusté selon le contexte dans lequel il se connecte au réseau.

Par exemple, si le terminal TA se déplace dans un autre pays, il devra se connecter à un réseau de communication visité d'un opérateur avec lequel l'opérateur du réseau d'origine R_HN a conclu un accord d'itinérance. Ce réseau visité peut ne pas offrir les mêmes services que le réseau d'origine et peut mettre en œuvre des procédures de traitement d'erreur ou des politiques tarifaires différentes du réseau d'origine.

Une configuration particulière du terminal est nécessaire selon qu'il se connecte à son réseau d'origine ou à un réseau visité, et selon l'opérateur du réseau visité.

De façon non exhaustive, une telle configuration peut comprendre, selon un type de réseau visité et/ou un opérateur mobile particulier :
- des règles de maintien ou non de l'APN (Access Point Name) IMS sur réseau 3G et/ou 2G en cas de mobilité depuis le réseau 4G ou depuis le réseau WiFi,
- des règles relatives au dés-enregistrement explicite SIP ou de maintien d'un enregistrement dans un cœur de réseau IMS par le terminal lorsqu'il change de réseau d'accès,
- des règles régissant l'activation ou non du service VxLTE ou du service VxWiFi,
- des critères d'activation du mode de Préconditions VxLTE selon la version des normes de télécommunications supportées par le réseau,
- des conditions d'activation de l'interface Ut pour configurer les services supplémentaires (renvois d'appels, appel secret, ...) ou l'interface MMI (Man to Machine Interface),
- des paramètres de configuration des niveaux radio WiFi (Roveln-RoveOut) permettant l'usage des services VxWiFi afin par exemple de permettre de diminuer les seuils en cas de problèmes sur le réseau cellulaires, sur une région ou globalement.
- des paramètres relatifs à la configuration des codecs audio et vidéo utilisables en fonction du type d'accès 2G, 3G, 4G ou WiFi,
- activation ou non des différents modes de SR-VCC (Single Radio Voice Call Continuity) supportés (SR-VCC, a-SRVCC (Alerting Single Radio Voice Call Continuity), b-SRVCC (Before alerting Single Radio Voice Call Continuity), r-SRVCC (Reverse Single Radio Voice Call Continuity), e-SRVCC (Enhanced Single Radio Voice Call Continuity),...)
- des paramètres relatifs à l'activation ou non du mode DR-VCC (Dual-Radio Voice-Call Continuity), ou encore
- des règles de traitement des appels d'urgence (repli en 2G/3G, en VoLTE, en VoWiFi,...).

Une configuration particulière du terminal est également nécessaire pour qu'il puisse réagir à des problèmes selon le type de réseau d'accès VoLTE ou VoWiFi. Pour cela, des règles de gestion des codes d'erreur sont mises en œuvre par le terminal. Ces règles peuvent être différentes selon que le réseau d'accès est un réseau VoWiFi ou VoLTE par exemple.

La configuration du terminal comprend également des règles qui décrivent des comportements à adopter en cas de perte de service.

Par exemple, si le service VxLTE offert par le réseau R_ACC2 n'est pas disponible, différents types de comportement peuvent être imposés au terminal par l'opérateur du réseau auquel il est attaché, parmi lesquels et de façon non limitative :
- Aucun traitement particulier (le service n'est pas rendu),
- Tentative de repli automatique en mode circuit CS via le réseau R_ACC1, si cette alternative n'a pas de coût supplémentaire pour le client,
- Tentative de repli « proposée à l'utilisateur » en mode circuit via le réseau R_ACC1 (2G/3G) sur le terminal avec demande à l'utilisateur de validation ou annulation si ce mode d'accès présente un coût supplémentaire,
- Tentative de repli en VxWiFi.

Selon un autre exemple, si le service VxWiFi n'est pas disponible auprès du réseau R_ACC3, différents comportements du terminal sont possibles et peuvent être compris dans la configuration, parmi lesquels :
- aucun traitement particulier (le service n'est pas rendu),
- Tentative de repli automatique en mode circuit CS Fallback (2G/3G) si pas de coût supplémentaire pour le client
- Tentative de repli automatique en mode circuit CS via le réseau R_ACC1, si cette alternative n'a pas de coût supplémentaire pour le client,
- Tentative de repli « proposée à l'utilisateur » en mode circuit via le réseau R_ACC1 (2G/3G) sur le terminal avec demande à l'utilisateur de validation ou annulation si ce mode d'accès présente un coût supplémentaire, et si les conditions le permettent (couverture 4G et niveau de radio suffisant, bouton du terminal non positionné sur WiFiOnly),
- Tentative de repli « proposée à l'utilisateur » en VxLTE (4G) sur le terminal avec demande à l'utilisateur de validation ou annulation et si les conditions le permettent (couverture 4G et niveau de radio suffisant, bouton du terminal positionné sur WiFi Only).

Selon un autre exemple, si le service SMSoIP (Short Message Service over IP) n'est pas disponible sur le réseau R_ACC2 et qu'un message ne peut pas être envoyé selon cette technologie, les comportements suivants peuvent être décrits dans la configuration :
- Aucun traitement particulier (le service n'est pas rendu),
- Tentative automatique (si pas de coût supplémentaire pour le client) ou proposée au client (si coût supplémentaire) en mode circuit via le réseau R_ACC1,
- En mode SMSoSGs si couverture 4G et si mode SMSoSGs disponible (à l'attachement du terminal au réseau, cette information est disponible)
- Repli en 2G/3G via R_ACC1 si pas possible en mode SMSoSGS ou si seulement sous couverture 2G/3G, puis traitement du SMS en mode classique 2G/3G )

Selon un dernier exemple, la configuration peut prévoir le fait qu'un service de messagerie RCS (Rich Communication Suite) ne soit pas disponible et prévoir en réponse un comportement particulier du terminal qui peut dépendre du type d'accès réseau. Dans ce cas, une configuration particulière peut ne rien prévoir, le service ne sera pas disponible, ou prévoir l'envoi d'un SMS classique via l'accès 2G/3G R_ACC1.

L'objet de l'invention est de permettre une configuration automatique du terminal selon des paramètres de configuration tels que ceux présentés ci-avant, en fonction des conditions dans lesquelles il accède au réseau.

Pour cela, il est proposé que le serveur SRV transmette au terminal des règles de configuration durant la procédure d'enregistrement du terminal TA dans le cœur de réseau R_C, les règles de configuration étant sélectionnées par le serveur SRV selon un paramètre relatif au réseau d'accès, comme par exemple le contenu d'un champ PANI d'un message SIP REGISTER. La configuration est par exemple transmise dans un format conforme au standard XML et contenue dans la section « body » du message de réponse 200 OK ou d'erreur 401. Un exemple de configuration au format XML est donné en annexe 1 du présent document.

Les procédés de configuration et d'obtention d'une configuration vont maintenant être décrits en référence aux figures 3 et 4.

Le terminal TA émet à l'étape 300 un message d'enregistrement SIP initial ou subséquent comprenant au moins un paramètre relatif au réseau d'accès. Le message d'enregistrement est de préférence un message SIP REGISTER initial et comprend au moins un paramètre relatif au réseau d'accès. Le paramètre relatif au réseau d'accès correspond par exemple au contenu d'un champ PANI renseigné par le terminal ou le réseau et décrit précédemment. Le champ PANI peut ainsi être valorisé par le terminal selon le type d'accès 2G ou 3G ou 4G et/ou selon la technologie d'accès radio cellulaire GERAN/UTRAN/EUTRAN et comporte un champ relatif à un identifiant ou d'un point d'accès Wi-Fi.

Le serveur SRV reçoit à l'étape 310 un message d'enregistrement SIP en provenance du terminal TA, le message d'enregistrement comprenant au moins un paramètre relatif au réseau d'accès.

Le message reçu comprend au moins un paramètre relatif au réseau d'accès, comme par exemple un champ PANI inséré par le terminal à l'étape 300. Le message peut également comporter des paramètres relatifs à l'accès insérés par des équipements réseau intermédiaires. Par exemple, le message peut contenir un champ PANI ou SIP P-VNI inséré et valorisé par un serveur P-CSCF par exemple. De telles informations insérées par le réseau sont certifiées car elles ne peuvent pas être falsifiées par le terminal.

Le terminal peut obtenir ces paramètres de différente manière.

Par exemple, si le terminal TA est dans une zone de couverture cellulaire, alors le terminal peut comparer des informations MNC (Mobile Network Code) et MCC (Mobile Country Code) transmises par le réseau cellulaire dans le canal de Broadcast de la radio cellulaire 2G/3G/4G avec le MCC et MNC contenu dans le paramètre IMSI de la carte SIM du terminal. De cette façon, le terminal peut déterminer s'il se trouve dans le réseau d'origine ou dans un réseau visité.

Le serveur SRV obtient lors d'une étape 311 une configuration adaptée au terminal en fonction du paramètre relatif au réseau d'accès compris dans le message d'enregistrement reçu. Ces données de configurations adaptées aux conditions d'accès du terminal TA sont obtenues par exemple par un serveur S-CSCF du réseau R_C.

Le S-CSCF obtient les paramètres de configuration adaptés aux conditions d'accès réseau du terminal reçues dans le message SIP REGISTER à l'étape 310. Ainsi, sur la base des informations contenues dans le ou les champ(s) PANI et/ou P-VNI reçues dans le message SIP REGISTER initial, et à partir d'autres paramètres propres à l'utilisateur du terminal TA obtenus auprès par exemple d"un serveur HSS, le serveur SRV détermine des paramètres de configuration optimaux pour le terminal TA. La configuration déterminée comprend, selon un mode de réalisation particulier, un paramètre relatif à un type de codage des flux multimédias accepté par le réseau de communication, un critère de sélection d'une technologie d'accès particulière pour établir des communications, ou encore au moins une stratégie de gestion des appels d'urgence.

Selon une réalisation particulière, des paramètres de configuration sont obtenus en fonction de paramètres préconfigurés dans un S-CSCF du réseau R_C et applicables pour l'ensemble des clients de l'opérateur.

Selon un mode de réalisation particulier, les paramètres de configuration sont obtenus auprès d'un serveur HSS du réseau R_C. Un serveur HSS mémorise le profil des utilisateurs du réseau. Les informations qu'il contient permettent une adaptation précise de la configuration à un client particulier, par exemple en fonction de son type de souscription (prepaid/post-paid,...), des services dont il dispose (VxLTE, VxWiFi, SMSoIP, RCS,...), de ses usages identifiés. Les usages comprennent par exemple les habitudes de communication du client (SMS, téléphonie, connexion de données, ...) et permettent en cas de déplacement du terminal TA dans un réseau visité, de sélectionner un opérateur partenaire dont les conditions tarifaires pour l'usage principal de l'utilisateur sont les plus avantageuses. Par exemple, si les informations obtenues auprès du HSS montrent que l'utilisateur du terminal TA utilise principalement des communications SMS, et que plusieurs opérateurs partenaires sont disponibles pour assurer l'itinérance dans un pays étranger, la configuration du terminal comprendra une règle de sélection de l'opérateur partenaire offrant les meilleurs conditions tarifaires pour les communications SMS.

Bien entendu, la configuration obtenue peut comprendre des paramètres partagés par tous les clients d'un opérateur et des paramètres spécifiquement adaptés au profil de l'utilisateur du terminal TA.

Selon une réalisation particulière, les paramètres retournés au terminal sont obtenus et générés par un serveur P-CSCF du réseau R_C via des interactions avec le PCRF (Policy and Charging Rules Function).

Le serveur SRV transmet au terminal une réponse au message d'enregistrement à l'étape 312, le message comprenant la configuration obtenue à partir du paramètre relatif au réseau d'accès.

A partir des paramètres de configuration obtenus à l'étape 311, le serveur SRV génère un fichier de configuration conforme au standard XML. Un exemple d'un tel fichier de configuration est donné en annexe 1.

La configuration donnée en annexe comporte des paramètres relatifs à la disponibilité des différents services VoLTE, ViLTE (Video over Long Term Evolution), VoWiFi, ViWiFi (Video over WiFi), SMSoIP, RCS du réseau R_C.

La configuration comporte dans une balise XML <APN IMS SIP Registration> et <APN IMS SIP DeRegistration> des règles d'enregistrement et de désenregistrement selon la technologie d'accès utilisée par le terminal.

Le fichier de configuration comporte aussi des stratégies de repli vers une technologie d'accès particulière données en fonction de la technologie d'accès courante. De telles stratégies sont communiquées au terminal au travers des balises <VoLTE Fallback>, <VoWiFi Fallback> ou <SMSoIP Fallback> de l'exemple de configuration annexé.

Le fichier de configuration généré comprend aussi par exemple des indications sur les codecs supportés par le réseau selon la technologie d'accès. De tels paramètres sont donnés en exemple dans le fichier de configuration annexé, en particulier dans les balises <2G Audio Cellular Codec>, <3G Audio Cellular Codec>, <4G Audio Cellular Codec> et <Wifi Audio Cellular Codec>.

L'exemple annexé n'est pas exhaustif et d'autres paramètres de configuration peuvent être insérés dans la configuration.

La configuration est alors insérée dans une réponse au message SIP REGISTER envoyée au terminal TA. Elle peut être insérée dans le corps d'un message SIP 200 OK de réponse au REGISTER ou 401.

A l'étape 301, Le terminal TA reçoit une réponse au message d'enregistrement, la réponse comportant au moins une configuration associée à au moins un paramètre relatif au réseau d'accès.

Le message reçu par le terminal en réponse à sa demande d'enregistrement contient des paramètres de configuration insérés par le serveur SRV à l'étape 311 et adaptés aux conditions dans lesquelles le terminal se connecte au réseau R_C. En particulier, la configuration reçue dépend du pays visité, du réseau visité, du point d'accès utilisé, de la technologie d'accès utilisée, de la localisation du terminal, d'un identifiant du terminal ou de services souscrits par l'utilisateur du terminal.

La configuration est ainsi reçue pendant la phase d'enregistrement. Selon un mode de réalisation préféré, les règles et paramètres de configuration sont reçus dans un message 200 OK de réponse à une requête SIP REGISTER émise précédemment, tel que le message 207 représenté sur la figure 2. Selon une réalisation particulière, la configuration est reçue dans un message de réponse 401 à une requête SIP REGISTER émise précédemment, comme par exemple le message 203 décrit en référence à la figure 2. Toutefois, lorsque la configuration est transmise dans un tel message 401, elle n'est pas transmise de manière sécurisée car le cryptage des échanges n'est pas encore négocié entre le terminal TA et le serveur SRV. Selon encore un mode de réalisation particulier. La configuration peut également être reçue dans une réponse à une requête SIP SUBSCRIBE, comme par exemple une requête SIP SUBSCRIBE émise par le terminal pour s'abonner à des évènements liés à l'enregistrement, comme par exemple ceux décrits dans la norme IETF RFC3680 (A Session Initiation Protocol (SIP) Event Package for Registrations).

Enfin, lors d'une étape 302, le terminal TA applique la configuration selon les règles reçues.

Le terminal TA prend en compte les paramètres de configuration reçus dès réception du 200 OK (REGISTER) et devra également prendre en compte certains paramètres dynamiquement de sa propre-initiative, par exemple lorsqu'il détecte un changement d'accès cellulaire (2G-<>3G<->4G<->2G) puisque lors de ces changements il n'y a pas d'envoi de message SIP Re-REGISTER vers le réseau, conformément à la normalisation IR.92, 3GPP 24.229.

La configuration obtenue est mémorisée par le terminal et les règles de configuration sont appliquées jusqu'au prochain 200 OK REGISTER contenant une configuration XML conforme à l'invention.

Les procédés d'obtention d'une configuration et de configuration présentés procurent un avantage technique par rapport à l'art antérieur, parmi lesquels :
- une meilleure prise en compte des terminaux du commerce dans leur diversité, par une configuration automatique de paramètres qui ne sont pas disponibles dans les normes actuelles mais qui sont très importants pour les opérateurs télécoms et qui sont actuellement préconfigurés dans les logiciels internes par les fabricants de terminaux sur recommandations des opérateurs).
- une consommation d'énergie réduite sur les terminaux grâce à une optimisation de la configuration permettant au terminal de ne pas envoyer certains messages pouvant s'avérer inutiles selon le contexte, et pour les mêmes raisons, une économie de ressources radio terminaux,
- une consommation moindre des ressources sur les liens d'accès et de collecte,
- une économie de ressource sur le cœur IMS,
- une simplification des terminaux et donc une réduction des coûts puisqu'il n'est pas nécessaire qu'ils implémentent des procédures et protocoles de connexion à une plate-forme dédiée (par exemple de type OMA-DM), généralement gérée et exploitée par l'opérateur de télécommunications,
- une meilleure prise en compte des différentes versions des standards de télécommunications (3GPP, GSMA, ETSi ,....),
- plus de flexibilité pour les opérateurs vis-à-vis des accords d'itinérance, grâce à la gestion dynamique de certains paramètres selon le pays visité et opérateur visité.

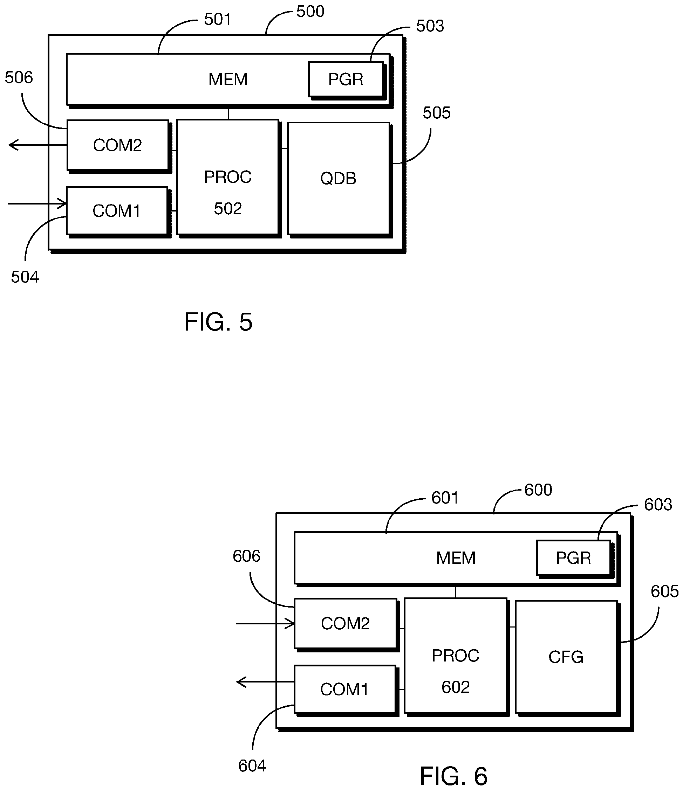

La figure 5 illustre l'architecture d'un dispositif 500 adapté pour mettre en œuvre le procédé de configuration selon un mode particulier de réalisation.

Le dispositif comprend un espace de stockage 501, par exemple une mémoire MEM, une unité de traitement 502 équipée par exemple d'un processeur PROC. L'unité de traitement peut être pilotée par un programme 503, par exemple un programme d'ordinateur PGR, mettant en œuvre le procédé de configuration tel que décrit dans le présent document en référence à la figure 4, et notamment les étapes de réception d'un message d'enregistrement SIP en provenance d'un terminal, le message d'enregistrement comprenant au moins un paramètre relatif au réseau d'accès, d'obtention d'une configuration à partir du paramètre relatif au réseau d'accès compris dans le message d'enregistrement reçu, et de transmission au terminal d'une réponse au message d'enregistrement, le message comprenant la configuration obtenue à partir du paramètre relatif au réseau d'accès.

À l'initialisation, les instructions du programme d'ordinateur 503 sont par exemple chargées dans une mémoire RAM (Random Access Memory) avant d'être exécutées par le processeur de l'unité de traitement 502. Le processeur de l'unité de traitement 502 met en œuvre les étapes du procédé de configuration selon les instructions du programme d'ordinateur 503.

Pour cela, outre la mémoire 501 et l'unité de traitement 502, le dispositif comprend au moins une interface de communication 504, telle que par exemple une interface réseau Ethernet adaptée pour recevoir des messages SIP en provenance de terminaux attaché à un réseau d'accès Ethernet, Wi-Fi, 2G, 3G ou 4G. L'interface de communication 504 est en particulier adaptée pour recevoir un message d'enregistrement SIP, tel qu'un message SIP REGISTER ou SIP SUBSCRIBE comprenant au moins un paramètre relatif au réseau d'accès, comme par exemple des paramètres contenus dans un champ SIP PANI ou P-VNI tels que décrits dans le présent document. Une telle interface de communication peut être une carte réseau et être associée à un processeur configuré par des instructions pour décoder les messages SIP reçus et en extraire des informations telles que le contenu d'un champ PANI ou P-VNI selon une logique protocolaire SIP.

Le dispositif comprend aussi un module 505 d'accès à une base de données adapté pour déterminer et obtenir une configuration à partir du paramètre relatif au réseau d'accès compris dans un message d'enregistrement reçu par le module de communication 504. Le module 505 peut être mis en œuvre par un processeur configuré par des instructions adaptées pour interroger au moins une base de données sur la base d'une requête SQL, SIP Diameter ou autre protocole. Par exemple, le module 505 peut interroger un serveur HSS ou un serveur P-CSCF ou un serveur PCRF pour obtenir des informations permettant de déterminer une configuration optimale pour le terminal. La configuration obtenue par le module 505 comprend, selon un mode de réalisation particulier, un paramètre relatif à un type de codage des flux multimédias accepté par le réseau de communication, un critère de sélection d'une technologie d'accès particulière pour établir des communications, ou encore au moins une stratégie de gestion des appels d'urgence ou au moins une stratégie de configuration de la pile SIP du terminal.

Le dispositif 500 comporte enfin un module de communication 506 adapté pour transmettre au terminal une réponse au message d'enregistrement, le message comprenant les paramètres de configuration déterminés et obtenus par le module 505 à partir du paramètre relatif au réseau d'accès. Les modules de communication 504 et 506 peuvent être mis en œuvre par une même interface réseau ou un même module de communication adapté tant pour émettre que pour recevoir des messages SIP. Le module 506 peut être mis en œuvre par un processeur configuré par des instructions adaptées pour générer un fichier conforme au format XML et contenant des paramètres de configuration déterminés et obtenus à partir du paramètre relatif au réseau d'accès compris dans un message REGISTER reçu par le module de communication 504 et insérer un tel fichier de configuration dans un message de réponse au message REGISTER reçu, comme par exemple dans un message de réponse 200 OK ou 401. Un tel paramètre est par exemple un champ PANI ou P-VNI.

Selon une réalisation particulière, le dispositif de configuration est intégrée dans un serveur, comme un serveur P-CSCF (ou A-SBC) ou un serveur d'application d'un réseau IMS.

La figure 6 illustre l'architecture d'un dispositif 600 adapté pour mettre en œuvre le procédé d'obtention d'une configuration selon un mode particulier de réalisation.

Le dispositif comprend un espace de stockage 601, par exemple une mémoire MEM, une unité de traitement 602 équipée par exemple d'un processeur PROC. L'unité de traitement peut être pilotée par un programme 603, par exemple un programme d'ordinateur PGR, mettant en œuvre le procédé d'obtention d'une configuration tel que décrit dans le présent document en référence à la figure 3, et notamment les étapes d'émission d'un message d'enregistrement SIP comprenant au moins un paramètre relatif au réseau d'accès, de réception d'une réponse au message d'enregistrement, la réponse comportant au moins une configuration associée au au moins un paramètre relatif au réseau d'accès, et de configuration du dispositif selon la configuration reçue.

À l'initialisation, les instructions du programme d'ordinateur 603 sont par exemple chargées dans une mémoire RAM (Random Access Memory) avant d'être exécutées par le processeur de l'unité de traitement 602. Le processeur de l'unité de traitement 602 met en œuvre les étapes du procédé d'obtention d'une configuration selon les instructions du programme d'ordinateur 603.

Pour cela, outre la mémoire 601 et l'unité de traitement 602, le dispositif 600 comprend au moins une interface de communication 604, telle que par exemple une interface réseau cellulaire 2G, 3G, 4G ou une interface Wi-Fi ou Ethernet ou une interface ADSL/Fibre/Câble, adaptée pour émettre des messages SIP à destination d'un serveur d'un réseau de communication IMS. L'interface de communication 604 est en particulier adaptée pour envoyer un message d'enregistrement SIP, tel qu'un message SIP REGISTER ou SIP SUBSCRIBE, comprenant au moins un paramètre relatif au réseau d'accès, comme par exemple des paramètres contenus dans un champ SIP PANI tels que décrits dans le présent document. Une telle interface de communication peut être une carte réseau et être associée à un processeur configuré par des instructions pour générer des messages conformes au protocole SIP comprenant en particulier un champ PANI.

Le dispositif 600 comporte aussi un module de communication 606 adapté pour recevoir des messages en provenance d'un réseau de communication IMS par l'intermédiaire d'un réseau d'accès Wi-Fi, 4G, ou 3G,ou 2G ou ADSL/Fibre/Câble, en particulier pour recevoir des messages de réponse 200 ou 401 à une requête SIP REGISTER envoyée par le dispositif. De tels messages comprennent, selon une réalisation particulière de l'invention, au moins un paramètre de configuration du terminal déterminé selon au moins un paramètre d'accès réseau compris dans un message d'enregistrement émis par le module 604 du dispositif. Un exemple de configuration pouvant être reçue par le module de communication 606 est donné en annexe 1.Selon une réalisation particulière, le module de communication 606 est adapté pour recevoir un message de réponse à une requête d'enregistrement SIP, le message comprenant une configuration comportant un paramètre relatif à un type de codage des flux multimédias accepté par le réseau de communication, un critère de sélection d'une technologie d'accès particulière pour établir des communications, une stratégie de gestion des appels d'urgence, ou encore une stratégie de configuration des procédures de continuité de service en cas de mobilité.

Les modules de communication 604 et 606 peuvent être mis en œuvre par une même interface réseau ou un même module de communication adapté tant pour émettre que pour recevoir des messages SIP. Le module 606 peut être mis en œuvre par un processeur configuré par des instructions adaptées pour recevoir des données transmises par un serveur au travers d'un réseau d'accès sans fil ou filaire, et décoder le message reçu pour en extraire des paramètres de configuration.

Le dispositif comprend aussi un module 605 pour appliquer la configuration reçue par le module 606. Un tel module est adapté pour mémoriser la configuration reçue dans une mémoire du terminal et appliquer les règles, stratégies et comportements qu'elle contient. Le module 605 peut être mis en œuvre par un processeur configuré par des instructions adaptées pour appliquer les paramètres de configuration reçus. Par exemple, le module 605 peut renouveler l'enregistrement du dispositif selon une logique de service comprise dans la configuration, interdire au terminal l'utilisation de certains codecs durant les phases d'établissement d'appels, ou encore effectuer des replis sur des interfaces réseau d'une technologie particulière en cas d'erreur.

Le dispositif 600 peut par exemple être intégré dans un terminal de communication tel que le terminal TA, un téléphone, un smartphone, une tablette, un ordinateur ou tout autre terminal de communication.

L'invention concerne aussi un système de configuration comprenant au moins un terminal comprenant un dispositif d'obtention d'une configuration et un serveur comprenant un dispositif de configuration.

### ANNEXE 1

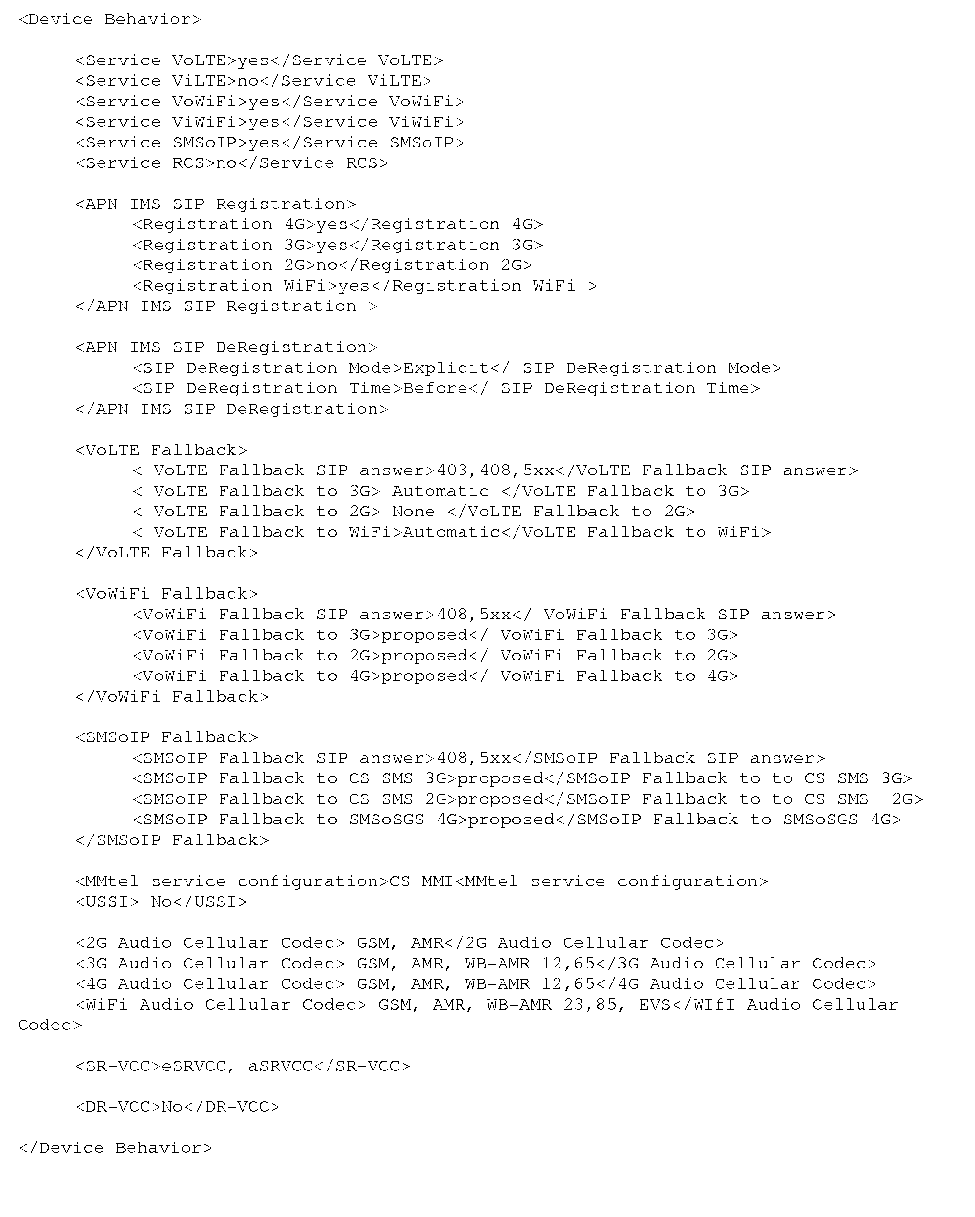

## Revendications

1. Procédé de configuration d'un terminal par un serveur dans un réseau de communication IMS comprenant les étapes suivantes :
- réception (310) d'un message d'enregistrement SIP en provenance d'un terminal, le message d'enregistrement comprenant au moins un paramètre relatif à un réseau d'accès utilisé par le terminal;
- obtention (311) d'une configuration à partir du paramètre relatif au réseau d'accès compris dans le message d'enregistrement reçu;
- transmission (312) au terminal d'une réponse au message d'enregistrement, le message comprenant la configuration obtenue à partir du paramètre relatif au réseau d'accès;
le procédé étant **caractérisé en ce que** ladite configuration obtenue comprend au moins une stratégie de sélection d'un réseau d'accès d'un second type lorsqu'une perte de connexion ou un échec d'établissement d'une communication est détecté sur un réseau d'accès d'un premier type.

2. Procédé selon la revendication 1 dans lequel la configuration comprend en outre au moins un paramètre relatif à un type de codage des flux multimédias accepté par le réseau de communication.

3. Procédé selon l'une quelconque des revendications précédentes dans lequel la configuration comprend au moins une stratégie de gestion des appels d'urgence.

4. Procédé selon l'une quelconque des revendications précédentes dans lequel la configuration comprend au moins une stratégie de configuration de la pile SIP du terminal.

5. Procédé selon l'une quelconque des revendications précédentes dans lequel le procédé est mis en œuvre par un serveur choisi parmi les serveurs de l'ensemble composé de :
- P-CSCF,
- I-CSCF,
- S-CSCF,
- A-SBC,
- AS, ou
- HSS.

6. Procédé selon l'une quelconque des revendications précédentes dans lequel ledit au moins un paramètre relatif au réseau d'accès est choisi dans l'ensemble comprenant :
- identifiant de pays visité,
- identifiant de réseau visité,
- identifiant d'un point d'accès,
- une technologie d'accès,
- une information de localisation, ou
- identifiant du terminal.

7. **Procédé** d'obtention d'une configuration par un terminal dans un réseau de communication IMS comprenant les étapes suivantes :
- émission (300) d'un message d'enregistrement SIP comprenant au moins un paramètre relatif à un réseau d'accès utilisé par le terminal;
- réception (301) d'une réponse au message d'enregistrement, la réponse comportant au moins une configuration associée au moins un paramètre relatif au réseau d'accès; et
- configuration (302) du terminal selon la configuration reçue;
ladite configuration reçue comprenant au moins une stratégie de sélection par le terminal d'un réseau d'accès d'un second type lorsqu'une perte de connexion ou un échec d'établissement d'une communication est détecté sur un réseau d'accès d'un premier type.

8. Procédé selon la revendication 7 dans lequel la configuration comprend en outre au moins un élément choisi parmi l'ensemble des éléments suivants :
- un paramètre relatif à un type de codage des flux multimédias accepté par le réseau de communication,
- une stratégie de gestion des appels d'urgence,
- une stratégie de configuration des procédures de continuité de service en cas de mobilité, ou
- une stratégie de configuration de la pile protocolaire SIP du terminal.

9. **Serveur** de configuration d'un terminal dans un réseau de communication IMS **caractérisé en ce qu'**il comprend :
- un module (504) de communication, configuré pour recevoir un message d'enregistrement SIP en provenance d'un terminal, le message d'enregistrement comprenant au moins un paramètre relatif au réseau d'accès;
- un module (505) d'accès à une base de données adapté pour obtenir une configuration à partir du paramètre relatif au réseau d'accès compris dans le message d'enregistrement reçu, ladite configuration obtenue comprenant au moins une stratégie de sélection d'un réseau d'accès d'un second type lorsqu'une perte de connexion ou un échec d'établissement d'une communication est détecté sur un réseau d'accès d'un premier type;
le module (506) de communication étant en outre adapté pour transmettre au terminal une réponse au message d'enregistrement, le message comprenant la configuration obtenue à partir du paramètre relatif au réseau d'accès.

10. **Dispositif** d'obtention d'une configuration pour la connexion du dispositif à un réseau de communication IMS, le dispositif comprenant:
- un module (604) de communication configuré pour transmettre un message d'enregistrement SIP vers un serveur du réseau de communication IMS, le message comprenant au moins un paramètre relatif au réseau d'accès utilisé par le dispositif, le module (604) de communication étant en outre configuré pour recevoir une réponse au message d'enregistrement, la réponse comportant au moins une configuration associée audit au moins un paramètre relatif au réseau d'accès, ladite configuration reçue comprenant au moins une stratégie de sélection d'un réseau d'accès d'un second type lorsqu'une perte de connexion ou un échec d'établissement d'une communication est détecté sur un réseau d'accès d'un premier type; et
- un module (605) de configuration du dispositif selon la configuration reçue par le module de communication.

11. **Terminal** comprenant un dispositif d'obtention de configuration selon la revendication 10.

12. **Système** de configuration comprenant un serveur selon la revendication 9 et un terminal selon la revendication 11.

13. **Programme** d'ordinateur comportant des instructions pour l'exécution des étapes du procédé de configuration selon l'une des revendications 1 à 6, et/ou des instructions pour l'exécution des étapes du procédé d'obtention de configuration selon l'une des revendication 7 à 8, lorsque le programme est exécuté par un processeur d'un serveur de configuration de terminal pour les revendications 1 à 6 et d'un terminal pour els revendications 7 à 8.

14. **Support** d'informations lisible par un ordinateur sur lequel est enregistré un programme d'ordinateur comprenant des instructions pour l'exécution dans un serveur de configuration de terminal des étapes du procédé de configuration selon l'une des revendications 1 à 6, et/ou des instructions pour l'exécution dans un terminal des étapes du procédé d'obtention de configuration selon l'une des revendication 7 à 8.

## Patentansprüche

1. Verfahren zur Konfiguration eines Endgeräts durch einen Server in einem IMS-Kommunikationsnetz, umfassend die folgenden Schritte:
- Empfangen (310) einer SIP-Registrierungsnachricht von einem Endgerät, wobei die Registrierungsnachricht mindestens einen Parameter in Bezug auf ein Zugangsnetz umfasst, das vom Endgerät genutzt wird;
- Erhalten (311) einer Konfiguration anhand des Parameters in Bezug auf das Zugangsnetz, der in der empfangenen Registrierungsnachricht enthalten ist;
- Übertragen (312) einer Antwort auf die Registrierungsnachricht an das Endgerät, wobei die Nachricht die Konfiguration umfasst, die anhand des Parameters in Bezug auf das Zugangsnetz erhalten wird; wobei das Verfahren **dadurch gekennzeichnet ist, dass** die erhaltene Konfiguration mindestens eine Strategie zur Auswahl eines Zugangsnetzes eines zweiten Typs, wenn ein Verbindungsverlust oder ein Fehlschlag bei der Herstellung einer Kommunikation in einem Zugangsnetz eines ersten Typs detektiert wird, umfasst.

2. Verfahren nach Anspruch 1, wobei die Konfiguration ferner mindestens einen Parameter in Bezug auf einen Codierungstyp der Multimediaströme umfasst, der vom Kommunikationsnetz akzeptiert wird.

3. Verfahren nach einem der vorhergehenden Ansprüche, wobei die Konfiguration mindestens eine Strategie zur Verwaltung der Notanrufe umfasst.

4. Verfahren nach einem der vorhergehenden Ansprüche, wobei die Konfiguration mindestens eine Strategie zur Konfiguration des SIP-Stapels des Endgeräts umfasst.

5. Verfahren nach einem der vorhergehenden Ansprüche, wobei das Verfahren von einem Server durchgeführt wird, der aus den Servern der Menge gewählt ist, die aus Folgendem gebildet ist:
- P-CSCF,
- I-CSCF,
- S-CSCF,
- A-SBC,
- AS, oder
- HSS.

6. Verfahren nach einem der vorhergehenden Ansprüche, wobei der mindestens eine Parameter in Bezug auf das Zugangsnetz aus der Menge gewählt ist, die Folgendes umfasst:
- Kennung eines besuchten Landes,
- Kennung eines besuchten Netzes,
- Kennung eines Zugangspunkts,
- eine Zugangstechnologie,
- eine Lokalisationsinformation, oder
- Kennung des Endgeräts.

7. Verfahren zum Erhalt einer Konfiguration durch ein Endgerät in einem IMS-Kommunikationsnetz, umfassend die folgenden Schritte:
- Senden (300) einer SIP-Registrierungsnachricht, die mindestens einen Parameter in Bezug auf ein Zugangsnetz umfasst, das vom Endgerät genutzt wird;
- Empfangen (301) einer Antwort auf die Registrierungsnachricht, wobei die Antwort mindestens eine Konfiguration aufweist, die mindestens einen Parameter in Bezug auf das Zugangsnetz zugeordnet ist; und
- Konfigurieren (302) des Endgeräts gemäß der empfangenen Konfiguration;
wobei die empfangene Konfiguration mindestens eine Strategie zur Auswahl, durch das Endgerät, eines Zugangsnetzes eines zweiten Typs, wenn ein Verbindungsverlust oder ein Fehlschlag bei der Herstellung einer Kommunikation in einem Zugangsnetz eines ersten Typs detektiert wird, umfasst.

8. Verfahren nach Anspruch 7, wobei das Konfigurieren ferner mindestens ein Element umfasst, das aus der Menge der folgenden Elemente gewählt ist:
- einen Parameter in Bezug auf einen Codierungstyp der Multimediaströme, der vom Kommunikationsnetz akzeptiert wird,
- eine Strategie zur Verwaltung der Notanrufe,
- eine Strategie zur Konfiguration der Dienstkontinuitätsverfahren im Falle von Mobilität, oder
- eine Strategie zur Konfiguration des SIP-Protokollstapels des Endgeräts.

9. Server zur Konfiguration eines Endgeräts in einem IMS-Kommunikationsnetz, **dadurch gekennzeichnet, dass** er Folgendes umfasst:
- ein Kommunikationsmodul (504), das dazu ausgebildet ist, eine SIP-Registrierungsnachricht von einem Endgerät zu empfangen, wobei die Registrierungsnachricht mindestens einen Parameter in Bezug auf das Zugangsnetz umfasst;
- ein Modul (505) zum Zugriff auf eine Datenbank, das geeignet ist, eine Konfiguration anhand des Parameters in Bezug auf das Zugangsnetz zu erhalten, der in der empfangenen Registrierungsnachricht enthalten ist, wobei die erhaltene Konfiguration mindestens eine Strategie zur Auswahl eines Zugangsnetzes eines zweiten Typs, wenn ein Verbindungsverlust oder ein Fehlschlag bei der Herstellung einer Kommunikation in einem Zugangsnetz eines ersten Typs detektiert wird, umfasst,
wobei das Kommunikationsmodul (506) ferner geeignet ist, an das Endgerät eine Antwort auf die Registrierungsnachricht zu übertragen, wobei die Nachricht die Konfiguration umfasst, die anhand des Parameters in Bezug auf das Zugangsnetz erhalten wird.

10. Vorrichtung zum Erhalt einer Konfiguration für die Verbindung der Vorrichtung mit einem IMS-Kommunikationsnetz, wobei die Vorrichtung Folgendes umfasst:
- ein Kommunikationsmodul (604), das dazu ausgebildet ist, eine SIP-Registrierungsnachricht zu einem Server des IMS-Kommunikationsnetzes zu übertragen, wobei die Nachricht mindestens einen Parameter in Bezug auf das Zugangsnetz umfasst, das von der Vorrichtung genutzt wird, wobei das Kommunikationsmodul (604) ferner dazu ausgebildet ist, eine Antwort auf die Registrierungsnachricht zu empfangen, wobei die Antwort mindestens eine Konfiguration aufweist, die dem mindestens einen Parameter in Bezug auf das Zugangsnetz zugeordnet ist, wobei die empfangene Konfiguration mindestens eine Strategie zur Auswahl eines Zugangsnetzes eines zweiten Typs, wenn ein Verbindungsverlust oder ein Fehlschlag bei der Herstellung einer Kommunikation in einem Zugangsnetz eines ersten Typs detektiert wird, umfasst
und
- ein Modul (605) zur Konfiguration der Vorrichtung gemäß der Konfiguration, die vom Kommunikationsmodul empfangen wird.

11. Endgerät umfassend eine Vorrichtung zum Erhalt einer Konfiguration nach Anspruch 10.

12. Konfigurationssystem umfassend einen Server nach Anspruch 9 und ein Endgerät nach Anspruch 11.

13. Computerprogramm aufweisend Anweisungen zur Ausführung der Schritte des Konfigurationsverfahrens nach einem der Ansprüche 1 bis 6 und/oder Anweisungen zur Ausführung der Schritte des Verfahrens zum Erhalt einer Konfiguration nach einem der Ansprüche 7 bis 8, wenn das Programm von einem Prozessor eines Servers zur Konfiguration eines Endgeräts für die Ansprüche 1 bis 6 und eines Endgeräts für die Ansprüche 7 bis 8 ausgeführt wird.

14. Computerlesbarer Informationsträger, auf dem ein Computerprogramm gespeichert ist, das Anweisungen für die Ausführung der Schritte des Konfigurationsverfahrens nach einem der Ansprüche 1 bis 6 in einem Server zur Konfiguration eines Endgeräts und/oder Anweisungen für die Ausführung, in einem Endgerät, der Schritte des Verfahrens zum Erhalt einer Konfiguration nach einem der Ansprüche 7 bis 8 umfasst.

## Claims

1. Method for configuring a terminal via a server in an IMS communication network, comprising the following steps:
- receiving (310) a SIP registration message from a terminal, the registration message comprising at least one parameter relating to an access network used by the terminal;
- obtaining (311) a configuration from the parameter relating to the access network contained in the received registration message,
- transmitting (312) a response to the registration message to the terminal, the message comprising the configuration obtained from the parameter relating to the access network;
the method being **characterized in that** said obtained configuration comprises at least one strategy for selecting an access network of a second type when a loss of connection or a failure to establish a communication is detected on an access network of a first type.

2. Method according to Claim 1, wherein the configuration further comprises at least one parameter relating to a type of coding of multimedia streams that is accepted by the communication network.

3. Method according to either one of the preceding claims, wherein the configuration comprises at least one strategy for managing emergency calls.

4. Method according to any one of the preceding claims, wherein the configuration comprises at least one strategy for configuring the SIP stack of the terminal.

5. Method according to any one of the preceding claims, wherein the method is implemented by a server chosen from among the servers from the set consisting of:
- P-CSCF,
- I-CSCF,
- S-CSCF,
- A-SBC,
- AS, or
- HSS.

6. Method according to any one of the preceding claims, wherein said at least one parameter relating to the access network is chosen from the set comprising:
- visited country identifier,
- visited network identifier,
- identifier of an access point,
- an access technology,
- location information, or
- identifier of the terminal.

7. Method for obtaining a configuration via a terminal in an IMS communication network, comprising the following steps:
- sending (300) a SIP registration message comprising at least one parameter relating to an access network used by the terminal;
- receiving (301) a response to the registration message, the response containing at least one configuration associated with at least one parameter relating to the access network; and
- configuring (302) the terminal according to the received configuration;
said received configuration comprising at least one strategy for the terminal to select an access network of a second type when a loss of connection or a failure to establish a communication is detected on an access network of a first type.

8. Method according to Claim 7, wherein the configuration further comprises at least one element chosen from among the set of the following elements:
- a parameter relating to a type of coding of multimedia streams that is accepted by the communication network,
- a strategy for managing emergency calls,
- a strategy for configuring service continuity procedures in the event of roaming, or
- a strategy for configuring the SIP protocol stack of the terminal.

9. Server for configuring a terminal in an IMS communication network, **characterized in that** it comprises:
- a communication module (504), configured so as to receive a SIP registration message from a terminal, the registration message comprising at least one parameter relating to the access network;
- a module (505) for accessing a database, designed to obtain a configuration from the parameter relating to the access network contained in the received registration message, said obtained configuration comprising at least one strategy for selecting an access network of a second type when a loss of connection or a failure to establish a communication is detected on an access network of a first type;
the communication module (506) further being designed to transmit a response to the registration message to the terminal, the message comprising the configuration obtained from the parameter relating to the access network.

10. Device for obtaining a configuration for connecting the device to an IMS communication network, the device comprising:
- a communication module (604) configured so as to transmit a SIP registration message to a server of the IMS communication network, the message comprising at least one parameter relating to the access network used by the device, the communication module (604) further being configured so as to receive a response to the registration message, the response containing at least one configuration associated with said at least one parameter relating to the access network, said received configuration comprising at least one strategy for selecting an access network of a second type when a loss of connection or a failure to establish a communication is detected on an access network of a first type; and
- a module (605) for configuring the device according to the configuration received by the communication module.

11. Terminal comprising a device for obtaining a configuration according to Claim 10.

12. Configuration system comprising a server according to Claim 9 and a terminal according to Claim 11.

13. Computer program containing instructions for executing the steps of the configuration method according to one of Claims 1 to 6 and/or instructions for executing the steps of the method for obtaining a configuration according to either of Claims 7 and 8 when the program is executed by a processor of a server for configuring a terminal for Claims 1 to 6 and of a terminal for Claims 7 and 8.

14. Computer-readable information medium on which there is recorded a computer program comprising instructions for executing, in a server for configuring a terminal, the steps of the configuration method according to one of Claims 1 to 6 and/or instructions for executing, in a terminal, the steps of the method for obtaining a configuration according to either of Claims 7 and 8.
